# EUROPÄISCHE PATENTSCHRIFT

(11) **EP 3 954 622 B1**
(45) Veröffentlichungstag und Bekanntmachung des Hinweises auf die Patenterteilung: **20.11.2024**
(21) Anmeldenummer: 21190479.2
(22) Anmeldetag: 10.08.2021
(51) Int. Cl.: B65D 23/02, B29C 63/00, B29C 63/20, B29C 63/36, B65D 23/08, B65D 51/00, B29C 63/42, B29C 63/46

(54) **MEHRWEGVERPACKUNG**
REUSABLE PACKAGING
EMBALLAGE RÉUTILISABLE

(30) Priorität: 12.08.2020 AT 506752020
(43) Veröffentlichungstag der Anmeldung: 16.02.2022
(60) Teilanmeldung: 22202187.5
(73) Patentinhaber: Michalt Technology GmbH, 1070 Wien (AT)
(72) Erfinder: Michalko, Milan, 01001 Zilina (SK)
(74) Vertreter: Speringer, Markus

(56) Entgegenhaltungen:
- WO-A1-2018/056910
- US-A- 3 212 951
- US-A- 3 362 574
- US-A1- 2013 000 263

## Beschreibung

### Technisches Gebiet

Die Erfindung betrifft eine Mehrwegverpackung umfassend einen Grundkörper in der Form eines Behälters mit einem Boden und Seitenwänden, einen Verschluss für den Behälter mit Seitenwänden und einer Deckfläche, sowie einen einseitig geschlossenen Folienschlauch, welcher im umhüllten Zustand an die äußeren Seitenwände und an den gesamten Innenraum des Grundkörpers angeformt, vorzugsweise aufgeschrumpft ist, wobei der Grundkörper im Boden zumindest eine Öffnung zur Anlegung eines Unterdrucks beim Umhüllen mit dem Folienschlauch aufweist.

### Stand der Technik

Eine derartige Mehrwegverpackung ist in der WO 2018/056910 A1 beschrieben. Der Vorteil der in dieser Druckschrift offenbarten Verpackung sowie der dazugehörigen Vorrichtung besteht darin, dass sie die Vorteile einer günstigen Einwegverpackung mit den Vorteilen einer Mehrwegverpackung vereint. Bei Einwegverpackungen, insbesondere beispielsweise Kunststoffflaschen besteht ein wesentlicher Nachteil darin, dass nach einmaliger Verwendung der gesamte Kunststoffbehälter als Müll anfällt und entweder entsorgt oder aufwändig recycelt werden muss. Mehrwegsysteme haben dahingegen den Nachteil, dass für eine weitere Befüllung der bereits benutzte Behälter aufwändig gewaschen werden muss, damit eine erneute Befüllung, beispielsweise mit Getränken möglich ist. Dieser Waschvorgang bedeutet einen hohen Energie- und Wasseraufwand, sowie eine Schädigung des Mehrwegbehälters, wodurch auch dieser nach einigen wenigen Befüllvorgängen entsorgt werden muss.

Bei der in der oben genannten Druckschrift vorgeschlagenen Verpackung wird ein Grundkörper mit einem Folienschlauch umhüllt. Der einseitig geschlossene Folienschlauch liegt im umhüllten Zustand im gesamten Innenraum des Grundkörpes an und erstreckt sich über die Hauptöffnung über die gesamten äußeren Flächen der Seitenwände hinab. Beim Befüllen mit einem Produkt, kommt dieses somit niemals mit dem Grundkörper in Berührung, sondern immer nur mit dem Folienschlauch. Der Folienschlauch kann nach jeder Verwendung automatisiert von der beschriebenen Vorrichtung entfernt werden. Dadurch entfällt der aufwändige Waschvorgang für den Grundkörper und dieser kann sofort wieder mit einem neuen Folienschlauch umhüllt und wieder befüllt werden. Als Müll fällt lediglich der Folienschlauch an, was eine deutliche Reduktion der Müllmenge gegenüber Einwegverpackungen bedeutet.

Wie eingangs beschrieben, kann das Umhüllen und Enthüllen des Grundkörpers vollständig automatisiert erfolgen. Beim Umhüllen wird ein Grundkörper über eine Fördereinrichtung zu einer Arbeitsposition befördert, bei welcher der Grundkörper mit dem einseitig geschlossenen Folienschlauch überzogen wird. Dazu wird der Folienschlauch an seinem offenen Ende aufgespannt und ausgehend von der Hauptöffnung des Grundkörpers über diesen gezogen. Anschließend wird über die Öffnungen im Boden des Grundkörpers ein Unterdruck angelegt, wodurch das geschlossene Ende des Folienschlauchs über die Hauptöffnung des Grundkörpers ins Innere gezogen wird.

An einer weiteren Arbeitsposition wird nun über eine Heizeinrichtung der Grundkörper mit Folienschlauch erhitzt, wodurch sich der Folienschlauch zusammenzieht und sich an den Grundkörper anformt.

Beim Enthüllen einer bereits benutzten Mehrwegverpackung wird diese ebenfalls über die Fördereinrichtung zu einer weiteren Arbeitsposition befördert, an welcher über die Öffnungen im Boden des Grundkörpers ein Überdruck angelegt wird. Der angeformte Folienschlauch wird dadurch vom Grundkörper ausgeblasen und kann automatisch über eine Absaugvorrichtung einer Entsorgung zugeführt werden.

### Kurzbeschreibung der Erfindung

Aufgabe der vorliegenden Erfindung ist es, die oben in der WO 2018/056910 A1 vorgeschlagene Mehrwegverpackung dahingehend zu verbessern, dass diese für weitere Anwendungen nutzbar gemacht wird, und dass die Herstellung der Mehrwegverpackung vereinfacht und beschleunigt werden kann. Dabei soll es insbesondere auch möglich sein, einen wiederverwendbaren Verschluss zu schaffen, sowie weitere Funktionalitäten, wie eine Füllstandsanzeige für die Mehrwegverpackung vorzusehen.

Diese Aufgabe wird durch die vorgeschlagene Mehrwegverpackung dadurch gelöst, dass der Verschluss ebenfalls an den äußeren Flächen seiner Seitenwände, an den inneren Flächen der Seitenwände und an der im geschlossenen Zustand dem Behälterinneren zugewandten Seite der Deckfläche mit einem weiteren Folienschlauch umhüllt ist, wobei der Folienschlauch im umhüllten Zustand passgenau angeformt, vorzugsweise aufgeschrumpft ist, und wobei der Verschluss in der Deckfläche zumindest eine Öffnung zur Anlegung eines Unterdrucks beim Umhüllen mit dem Folienschlauch aufweist. Der Verschluss kann dabei aus dem gleichen Material gefertigt sein wie der Grundkörper und mit diesem beispielsweise über ein Gewinde verschraubbar sein. Auch andere Verschlussmechanismen, wie eine Raste, eine Presspassung oder ein Bajonettverschluss sind möglich. Dadurch, dass auch der Verschluss über entsprechende Löcher in seiner Deckfläche verfügt, kann er über die gleiche Vorrichtung wie der Grundkörper mit einem in der Größe an den Verschluss angepassten einseitig offenen Folienschlauch umhüllt werden. Beim Befüllen kommt das Produkt somit niemals mit dem Verschluss selbst oder mit dem Grundkörper in Berührung sondern immer nur mit den aufgeschrumpften Folienschläuchen, welche entsprechend als Einmalprodukt nach der Verwendung vom Verschluss und Grundkörper entfernt und entsorgt werden.

Dabei ist es ein weiteres bevorzugtes Merkmal, dass am Verschluss an den inneren Flächen der Seitenwände Führungsvorsprünge vorgesehen sind, welche mit einem an der Hauptöffnung des Grundkörpers vorgesehenen Gewinde in Eingriff bringbar sind, und dass an den Seitenwänden des Verschlusses zwischen den Führungsvorsprüngen jeweils Durchbrüche vorgesehen sind, die der Vermeidung von Faltenbildung beim Anformen des Folienschlauchs dienen. Insbesondere im Bereich des Verschlusses muss der Folienschlauch eine hohe Passgenauigkeit haben, damit dieser beim Aufsetzen auf den umhüllten Grundkörper nach dem Befüllen auch dicht schließt. Üblicherweise muss der Folienschlauch beim Verschluss einerseits über engere Radien geführt werden als beim Grundkörper, und andererseits muss sich der Folienschlauch auch über die Führungsvorsprünge sauber anlegen. Aus diesem Grund ist es ein bevorzugtes Merkmal, dass zwischen den jeweiligen Führungsvorsprüngen Durchbrüche in den Seitenwänden des Verschlusses vorgesehen sind. Beim Aufschrumpfen des Folienschlauches an den Verschluss kann sich die Folie im Bereich der Durchbrüche enger zusammenziehen, wodurch sie im Bereich der Führungsvorsprünge dann glatt anliegt und eine Faltenbildung vermieden wird.

Gemäß einer möglichen bevorzugten Ausführungsform ist es vorgesehen, dass der Grundkörper an den Seitenwänden an zumindest einer Stelle einen senkrecht vom Boden ausgehend nach oben verlaufenden schlitzförmigen Durchbruch aufweist, wobei der Durchbruch zumindest abschnittsweise radial in den Boden hineinragt und dadurch die Öffnung zur Anlegung des Unterdrucks ausbildet, und wobei der Durchbruch eine Höhe aufweist, welche mindestens etwa 50%, vorzugsweise mindestens etwa 80% der Höhe des Grundkörpers entspricht. Durch den in der Seitenwand vorgesehen Schlitz kann auf einfache Weise eine Füllstandsanzeige in der Mehrwegverpackung vorgesehen werden. Im fertig umhüllten Zustand wird der schlitzförmige Durchbruch zu beiden Seiten von dem aufgeschrumpften Folienschlauch überdeckt. Da dieser durchsichtig oder zumindest durchscheinend ist, kann so der Füllstand der Verpackung von außen gut abgelesen werden. Gleichzeitig dient der bis in den Boden hinein verlängerte Durchbruch als Öffnung für das Anlegen des Unterdrucks beim Überziehen des Folienschlauchs. Dadurch können weitere Öffnungen im Boden des Grundkörpers eingespart werden, was die Herstellung des Grundkörpers vereinfacht.

### Kurze Beschreibung der Zeichnungsfiguren

Die Erfindung wird nun in größerem Detail anhand von Ausführungsbeispielen sowie mit Hilfe der beiliegenden Figuren beschrieben. Dabei zeigen
Fig. 1 eine schematische perspektivische Ansicht einer Ausführungsform eines Verschlusses für eine erfindungsgemäße Mehrwegverpackung,
Fig. 2 eine schematische perspektivische Schnittansicht einer Ausführungsform eines Grundkörpers für eine erfindungsgemäße Mehrwegverpackung,
Fig. 3 eine schematische Aufsicht auf eine Ausführungsform eines Greifrahmens eines Manipulators in der zusammengeklappten Position,
Fig. 4 eine schematische Aufsicht auf den Greifrahmen aus Fig. 3 in der aufgespannten Position,
Fig. 5 eine schematische perspektivische Ansicht einer Ausführungsform eines Halteelements der Fördereinrichtung und
Fig. 6 eine schematische perspektivische Ansicht einer weiteren Ausführungsform eines Halteelements der Fördereinrichtung.

### Beschreibung der Ausführungsarten

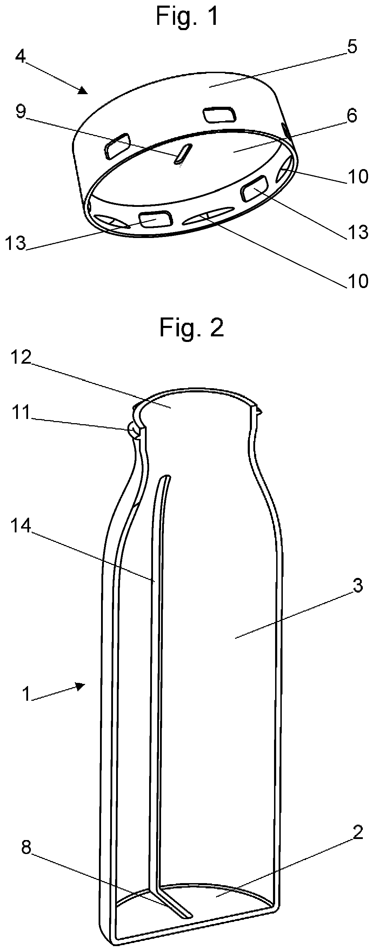

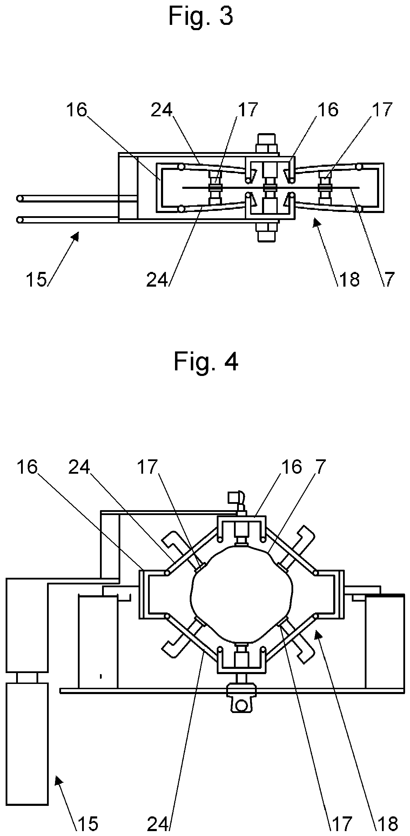

In Fig. 1 ist schematisch ein Verschluss 4 dargestellt. Der Verschluss 4 weist eine Deckfläche 6 auf, an welche Seitenwände 5 anschließen. Damit der Verschluss 4 in einer erfindungsgemäßen Mehrwegverpackung eingesetzt werden kann, muss er mit einem einseitig geschlossenen Folienschlau 7 (siehe Fig. 4) überzogen werden. Der Folienschlauch 7 weist vor dem Anformen einen Durchmesser auf, welcher zumindest dem größeren Durchmesser des Verschlusses 4 entspricht und eine Höhe, welche etwa der doppelten Höhe der Seitenwände 5 entspricht.

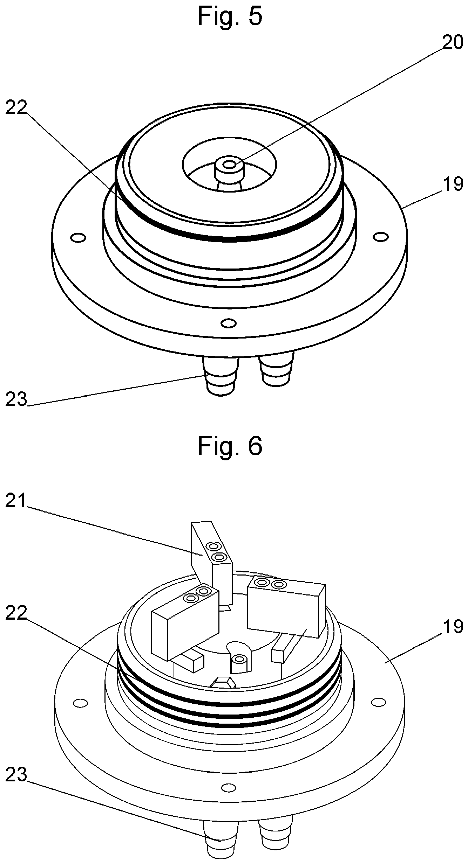

Zum Anformen wird der Verschluss 4 mit der Deckfläche 6 nach unten auf einem Halteelement 19 (siehe Fig. 5) fixiert und in der Vorrichtung zum Umhüllen zu einer Arbeitsposition bewegt, wo der Folienschlauch 7 mit seinem offenen Ende über das offene Ende des Verschlusses 4 gezogen wird. Anschließend wird an der Öffnung 9 in der Deckfläche 6 ein Unterdruck angelegt, wodurch das geschlossene Ende des Folienschlauchs 7 gegen die innere Seite der Deckfläche 6 gezogen wird. In einer weiteren Arbeitsposition innerhalb der Vorrichtung wird anschließend der Verschluss 4 erhitzt, wodurch der Folienschlauch 7 schrumpft und sich beidseitig an die Seitenwände 5 und an die Innenseite der Deckfläche 6 anlegt.

An den inneren Flächen der Seitenwände 5 sind Führungsvorsprünge 10 vorgesehen, welche in ein entsprechendes Gewinde 11 (siehe Fig. 2) am Grundkörper 1 eingreifen können. Damit beim Aufschrumpfen des Folienschlauchs 7 auf den Verschluss 4 eine Faltenbildung insbesondere im Bereich der Führungsvorsprünge 10 vermieden wird, sind Durchbrüche 13 in den Seitenwänden 5 zwischen den Führungsvorsprüngen 10 vorgesehen. Beim Schrumpfvorgang zieht sich der Folienschlauch 7 in den Durchbrüchen 13 verstärkt zusammen und spannt sich so glatt über den Bereich der Führungsvorsprünge 10.

In der Fig. 2 ist schematisch ein geschnittener Grundkörper 1, hier in Form einer Flasche, dargestellt. Der Grundkörper 1 umfasst einen Boden 2, sowie Seitenwände 3. Am oberen Ende befindet sich die Hauptöffnung 12 mit dem Gewinde 11, auf welches der Verschluss 4 aufschraubbar ist. Ferner weist der Grundkörper einen schlitzförmigen Durchbruch 14 auf, welcher sich im Wesentlichen senkrecht entlang der Seitenwand 3 erstreckt. Der schlitzförmige Durchbruch 14 ragt ferner radial vom Rand aus zumindest abschnittsweise in den Boden 2 hinein und bildet hier die Öffnung 8 für das Anlegen des Unter- bzw. Überdrucks aus.

Der Folienschlauch 7 für den Grundkörper 1 weist einen Durchmesser auf, welcher zumindest dem größeren Durchmesser des Grundkörpers entspricht und eine Höhe, welche zumindest der doppelten Höhe der Seitenwand 3 entspricht. Auch hier wird der Grundkörper 1 in einer entsprechenden Vorrichtung mit seinem Boden 2 an einem Halteelement 19 der Fördereinrichtung fixiert und anschließend zu den entsprechenden Arbeitspositionen befördert. Das Überstülpen des Folienschlauchs erfolgt in gleicher Weise, wie beim Verschluss 4. Beim Anlegen des Unterdrucks an der Öffnung 8 im Boden 2 des Grundkörpers 1 dichtet ein Dichtungsring 22 (siehe Fig. 5) an der Kante des Bodens 2 zur Seitenwand 3 hin ab. Der schlitzförmige Durchbruch 14 entlang der Seitenwand 3 wird durch den an der äußeren Fläche der Seitenwand 3 anliegenden Folienschlauch 7 abgedichtet. Durch den aufgebauten Unterdruck wird das geschlossene Ende des Folienschlauchs 7 nach Innen in den Grundkörper 1 gesaugt und kleidet so den Innenraum vollständig aus. Es versteht sich für den Durchschnittsfachmann, dass im Bereich des Gewindes 11 nahe der Hauptöffnung 12 ebenfalls Durchbrüche in der Seitenwand vorgesehen werden können, um ähnlich zu den Durchbrüchen 13 am Verschluss 4 eine Faltenbildung des Folienschlauchs in diesem Bereich zu minimieren.

In den Fig. 3 und 4 ist schematisch ein Greifrahmen 18 eines Manipulators 15 einer Mehrwegverpackungsvorrichtung in einer Aufsicht dargestellt. Der Greifrahmen 18 umfasst vier Eckabschnitthalterungen 16, welche gelenkig mit vier Seitenabschnittrahmen 24 verbunden sind. In der Fig. 3 befindet sich der Greifrahmen in seiner zusammengeklappten Position, in welcher zwei gegenüberliegende Eckabschnitthalterungen 16 und die vier Seitenabschnittrahmen parallel zueinander ausgerichtet sind, während die verbleibenden Eckabschnitthalterungen 16 ihren maximalen Abstand zueinander haben. An den Seitenabschnittrahmen 24 und den beiden unmittelbar aneinander liegenden Eckabschnitthalterungen 16 sind jeweils Saugköpfe 17 vorgesehen, welche in der zusammengeklappten Position das offene Ende eines zugeführten und noch flach zusammengefalteten Folienschlauchs 7 greifen.

Nach Anlegen eines Unterdrucks an den Saugköpfen 17 kann der Greifrahmen 18 in die aufgespannte entfaltete Ausgangposition verschwenkt werden. Dabei bewegen sich die beiden voneinander beabstandeten Eckabschnitthalterungen 16 aufeinander zu, während sich die beiden anderen Eckabschnitthalterungen 16 voneinander wegbewegen. Die Eckabschnitthalterungen 16 dienen zur Rahmenbewegungsstabilisierung bei der Rahmenöffnung. Die Bewegung kann durch eine Hydraulik erfolgen. Durch das Aufspannen des Greifrahmens entfaltet sich der Folienschlauch 7, wie dies in der Fig. 4 zu sehen ist. In dieser Position kann er über einen Grundkörper 1 oder einen Verschluss 4 gezogen werden. Damit sich der Folienschlauch 7 vollständig entfaltet, kann am unteren Ende des Folienschlauchs über Luftdüsen am Manipulator oder im Halteelement 19 Luft eingeblasen werden.

In der Fig. 5 ist eine mögliche Ausführungsform eines Halteelements 19 einer Fördereinrichtung schematisch dargestellt. Dieses Halteelement 19 weist ein zentrales Saugelement 20 auf, welches am Boden 2 eines Grundkörpers 1 oder an der Deckfläche 6 eines Verschlusses 4 angreifen kann, um dieses auf der Fördereinrichtung zu fixieren. Diese Ausführungsform eignet sich besonders für Verschlüsse 4 und Grundkörper 1 mit flacher Deckfläche 6 bzw. flachem Boden 2. Das Halteelement 19 weist ferner einen Dichtungsring 22 auf, welcher den betroffenen Grundkörper 1 oder Verschluss 4 abdichtet, In der Mitte des Dichtungsrings 22 befinden sich Durchtrittsöffnungen 23, an denen eine Unterdruck- oder Überdruckquelle angeschlossen werden kann, um den Folienschlauch über die Öffnungen 8,9 im Grundkörper 1 bzw. Veschluss 4 einzusaugen bzw. auszublasen.

In der Fig. 6 ist schließlich eine Ausführungsform eines Halteelements 19 schematisch dargestellt, welche speziell für Grundkörper 1 und Verschlüsse 4 mit nach innen versetztem Boden 2 bzw. nach innen versetzter Deckfläche 6 geeignet ist. Bei diesen Grundkörpern 1 bzw. Verschlüssen 4 erstrecken sich die Seitenwände 3,5 über den Boden 2 bzw. die Deckfläche 6 hinaus, wodurch ein Steg gebildet wird, an dem die Greifelemente 21 des Halteelements 19 angreifen können, um den Grundkörper 1 bzw. den Verschluss 4 zu fixieren. Abgesehen von dem Greifelement 21 anstelle des Saugelements 20 ist das Halteelement 19 genauso aufgebaut wie jenes aus der Fig. 5.

## Patentansprüche

1. Mehrwegverpackung umfassend einen Grundkörper (1) in der Form eines Behälters mit einem Boden (2) und Seitenwänden (3), einen Verschluss (4) für den Behälter mit Seitenwänden (5) und einer Deckfläche (6), sowie einen einseitig geschlossenen Folienschlauch (7), welcher im umhüllten Zustand an die äußeren Seitenwände (3) und den gesamten Innenraum des Grundkörpers (1) angeformt, vorzugsweise aufgeschrumpft ist, wobei der Grundkörper (1) im Boden (2) zumindest eine Öffnung (8) zur Anlegung eines Unterdrucks beim Umhüllen mit dem Folienschlauch (7) aufweist, **dadurch gekennzeichnet, dass** der Verschluss (4) ebenfalls an den äußeren Flächen seiner Seitenwände (5), an den inneren Flächen der Seitenwände (5) und an der im geschlossenen Zustand dem Behälterinneren zugewandten Seite der Deckfläche (6) mit einem weiteren Folienschlauch (7) umhüllt ist, wobei der Folienschlauch (7) im umhüllten Zustand passgenau angeformt, vorzugsweise aufgeschrumpft ist, und wobei der Verschluss (4) in der Deckfläche (6) zumindest eine Öffnung (9) zur Anlegung eines Unterdrucks beim Umhüllen mit dem Folienschlauch (7) aufweist.

2. Mehrwegverpackung nach Anspruch 1, **dadurch gekennzeichnet, dass** am Verschluss (4) an den inneren Flächen der Seitenwände (5) Führungsvorsprünge (10) vorgesehen sind, welche mit einem an der Hauptöffnung (12) des Grundkörpers vorgesehenen Gewinde (11) in Eingriff bringbar sind, **und dass** an den Seitenwänden (5) des Verschlusses (4) zwischen den Führungsvorsprüngen (10) jeweils Durchbrüche (13) vorgesehen sind, die der Vermeidung von Faltenbildung beim Anformen des Folienschlauchs (7) dienen.

3. Mehrwegverpackung nach Anspruch 1 oder 2, **dadurch gekennzeichnet, dass** der Grundkörper (1) an den Seitenwänden (3) an zumindest einer Stelle einen senkrecht vom Boden (2) ausgehend nach oben verlaufenden schlitzförmigen Durchbruch (14) aufweist, wobei der Durchbruch (14) zumindest abschnittsweise radial in den Boden (3) hineinragt und dadurch die Öffnung (8) zur Anlegung des Unterdrucks ausbildet, und wobei der Durchbruch (14) eine Höhe aufweist, welche mindestens etwa 50%, vorzugsweise mindestens etwa 80% der Höhe des Grundkörpers (1) entspricht.

## Claims

1. A reusable packaging comprising a base body (1) in the form of a container with a bottom (2) and side walls (3), a closure (4) for the container with side walls (5) and a covering surface (6), as well as a foil tube (7) closed on one side, which, in the enveloped state, is moulded, preferably shrunk, onto the outer side walls (3) and the entire interior of the base body (1), wherein the base body (1) includes at least one opening (8) in the bottom (2) for applying a negative pressure during enveloping with the foil tube (7), **characterised in that** the closure (4) is also enveloped with a further foil tube (7) on the outer surfaces of its side walls (5), on the inner surfaces of the side walls (5), and on the side of the covering surface (6) facing the interior of the container in the closed state, wherein the foil tube (7) is moulded, preferably shrunk, precisely in the enveloped state, and wherein the closure (4) includes at least one opening (9) in the covering surface (6) for applying a negative pressure during enveloping with the foil tube (7).

2. The reusable packaging according to claim 1, **characterised in that** on the closure (4) at the inner surfaces of the side walls (5) guide projections (10) are provided which can be engaged with a thread (11) provided on the main opening (12) of the base body, and **in that** at the side walls (5) of the closure (4) between the guide projections (10) breakthroughs (13) are provided, which breakthroughs (13) serve to prevent the formation of wrinkles when the foil tube (7) is moulded.

3. The reusable packaging according to claim 1 or 2, **characterised in that** the base body (1) includes a slot shaped breakthrough (14) at the side walls (3) on at least one location, extending vertically upwards from the bottom (2), wherein the breakthrough (14) projects at least in sections radially into the bottom (3) and thereby forms the opening (8) for applying the negative pressure, and wherein the breakthrough (14) includes a height which corresponds to at least about 50%, preferably at least about 80% of the height of the base body (1).

## Revendications

1. Emballage réutilisable comprenant un corps de base (1) ayant la forme d'un récipient qui comporte un fond (2) et des parois latérales (3), un dispositif de fermeture (4) lequel est destiné audit récipient et lequel comporte des parois latérales (5) et une surface de couverture (6), ainsi qu'un film tubulaire (7) fermé sur l'un de ses côtés qui est appliqué, de préférence par rétrécissement, sur les parois latérales extérieures (3) et sur l'intégralité de l'enceinte du corps de base (1) lorsqu'il adopte son état de gainage, le corps de base (1) étant doté, dans son fond (2), d'au moins un orifice (8) permettant d'appliquer une pression négative lorsque le film tubulaire (7) est mis en œuvre pour le gainage, **caractérisé en ce que** le dispositif de fermeture (4) est également pourvu, sur les surfaces extérieures de ses parois latérales (5), sur les surfaces intérieures de ses parois latérales (5) et sur la face de la surface de couverture (6) qui à l'état fermé est tournée vers l'enceinte du récipient, d'un gainage par un autre film tubulaire (7), le film tubulaire (7) y étant appliqué de manière précise, de préférence par rétrécissement, lorsqu'il adopte son état de gainage, et le dispositif de fermeture (4) comportant dans la surface de couverture (6) au moins un orifice (9) permettant d'appliquer une pression négative lorsque le film tubulaire (7) est mis en œuvre pour le gainage.

2. Emballage réutilisable selon la revendication 1, **caractérisé en ce que** le dispositif de fermeture (4) est pourvu, sur les surfaces intérieures des parois latérales (5), de saillies de guidage (10) pouvant être engagées dans un filetage (11) équipant l'ouverture principale (12) du corps de base, **et que** les parois latérales (5) du dispositif de fermeture (4) sont pourvues, à chaque occurrence entre les saillies de guidage (10), de percées (13) servant à éviter la formation de plis lorsque le film tubulaire (7) est appliqué.

3. Emballage réutilisable selon les revendications 1 ou 2, **caractérisé en ce que** le corps de base (1) comporte, à au moins un endroit sur les parois latérales (3), une percée (14) en forme de fente qui s'étend depuis le fond (2) vers le haut, la percée (14) s'étendant au moins sur certaines parties radialement dans le fond (3) pour ainsi former l'orifice (8) permettant d'appliquer la pression négative, et la percée (14) présentant une hauteur qui correspond à au moins environ 50 %, de préférence à au moins environ 80 % de la hauteur du corps de base (1).
